(19) Europäisches Patentamt
European Patent Office
Office européen des brevets

(11) **EP 3 366 432 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(51) Int Cl.:
**B25J 9/00** *(2006.01)* **B25J 13/08** *(2006.01)*

(21) Anmeldenummer: **18154762.1**

(22) Anmeldetag: **01.02.2018**

(54) **MESSSYSTEM UND FÖRDERVORRICHTUNG**

MEASURING SYSTEM AND CONVEYING DEVICE

SYSTÈME DE MESURE ET DISPOSITIF DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2017 EP 17157443**

(43) Veröffentlichungstag der Anmeldung:
**29.08.2018 Patentblatt 2018/35**

(73) Patentinhaber: **SICK STEGMANN GmbH**
**78166 Donaueschingen (DE)**

(72) Erfinder:
• **Sellmer, Christian**
**78166 Donaueschingen (DE)**
• **Brugger, Simon**
**79853 Lenzkirch (DE)**
• **Hummel, Martin**
**78050 Villingen-Schwenningen (DE)**
• **Merkle, Clemens**
**78166 Donaueschingen (DE)**
• **Hofmann, Tobias**
**68165 Mannheim (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
WO-A1-2016/126173 DE-A1-102010 015 530
DE-T5-112011 103 897 US-A1- 2013 292 543

**Beschreibung**

Die Erfindung betrifft ein Messsystem zum Bestimmen einer Pose, insbesondere einer Position und einer Orientierung, eines an biegeschlaffen Zugmitteln aufgehängten Objektes gemäß dem Oberbegriff des Anspruchs 1 und eine Fördervorrichtung zum Befördern von Objekten und/oder Personen gemäß dem Oberbegriff des Anspruchs 9.

Heutzutage werden in der Industrie, Forschung und beispielsweise sogar im Sport Anwendungen verwendet, bei denen ein Objekt mittels biegeschlaffen Zugmitteln im Raum positioniert wird. Hierbei sind an dem Objekt mindestens zwei Zugmittel befestigt, die von Aktuatoren bewegt werden, so dass die Zugmittel das Objekt schnell und genau an eine vorgegebene Position im Raum positionieren. Im Folgenden werden unter dem Begriff "biegeschlaffe Zugmittel" synonym ein Verbindungsseil, ein Riemen oder eine Kette und unter dem Begriff "Aktuator" synonym ein Antriebsmotor verstanden.

Im Sport kann solch eine Anwendung beispielsweise die Positionierung einer Stadion-Kamera als Objekt über einem Spielfeld sein. In der Industrie oder der Forschung wird beispielsweise untersucht, in Hochregallagern Fördervorrichtungen, insbesondere in Form eines sogenannten Seilroboters, als Anwendung einzusetzen, um Objekte aus bzw. in Regalfächer des Hochregallagers zu befördern. Hierbei wird eine Transportplattform zu dem jeweiligen Regalfach bewegt, aus bzw. in dem das Objekt ent- bzw. beladen wird. Die Transportplattform ist über Verbindungsseile, die die biegeschlaffe Zugmittel darstellen, mit Aktuatoren bzw. Antriebsmotoren verbunden, wobei die Verbindungsseile auf Winden aufgewickelt sind und mittels Seilrollen umgelenkt werden.

Die Antriebsmotoren drehen die Winden, so dass die Verbindungsseile auf- bzw. abgewickelt werden, wodurch die Transportplattform in eine entsprechende Position gegenüber den Regalfächern des Hochregallagers bewegt wird. Diese Fördervorrichtung hat den immensen Vorteil gegenüber herkömmlichen Hochregallager-Fördervorrichtungen, dass ein wesentlich besseres Verhältnis Nutzlast zur bewegten Gesamtmasse erzielbar ist.

Solch eine Fördervorrichtung kann auch dazu dienen, eine auf der Transportplattform platzgenommene Person zu befördern. Hierbei wird die Transportplattform, wie bereits erläutert, durch Auf- bzw. Abwickeln der Verbindungsseile auf bzw. von den Winden in die vorgesehene Position bewegt.

Bei beiden genannten Anwendungsbeispielen der Fördervorrichtung ist eine genaue Pose, insbesondere eine Position und eine Orientierung, der Transportplattform im Raum für die Positionierung der Transportplattform unabdingbar und von großer Bedeutung.

Hierzu werden aus Daten der Antriebsmotoren die Verbindungsseillängen ermittelt, woraus eine Absolutposition der Transportplattform im Raum berechnet wird.

Bei der Berechnung der Pose der Transportplattform aus der Verbindungsseillänge fließen zusätzliche Wegstrecken ein, die weitere Fehlereinflüsse für die Berechnung der Verbindungsseillängen bedeuten. So beinhalten die Verbindungsseillängen, die aus den Daten der Antriebsmotoren berechnet werden, auch die Strecke von der Winde bis zu den Seilrollen. Auch die Auf- bzw. Abwicklung des Verbindungsseils auf der Winde fließt in die Verbindungsseillängenberechnung ein und muss später aufwändig herausgerechnet werden, soweit möglich.

Ferner weist jedes Verbindungsseil eine eigene Elastizität auf, die eine kraftabhängige und umgebungsbedingungsabhängige Längenänderung bewirkt und somit einen Einfluss auf die Berechnung der Verbindungsseillänge bzw. der Pose der Transportplattform besitzt. Hierbei können Umgebungsbedingungen beispielsweise Temperaturänderungen sein.

Diese Faktoren bewirken eine nicht zufriedenstellende und ungenaue Bestimmung der Pose der Transportplattform.

DE 10 2010 015 530 A1 offenbart ein Lagersystem, das ein Regallager umfasst, wobei vor dem Regallager ein Bediengerät positionierbar ist. Das Bediengerät entspricht im Wesentlichen einer Fördervorrichtung mit den Merkmalen des Oberbegriffs des Anspruchs 9, wobei ein Messsystem mit den Merkmalen des Oberbegriffs des Anspruchs 1 vorgesehen ist, um die Pose des Bediengeräts zu bestimmen.

Es ist daher eine Aufgabe der Erfindung, ein Messsystem zum Bestimmen einer Pose, insbesondere einer Position und einer Orientierung, eines an biegeschlaffen Zugmitteln aufgehängten Objektes und eine Fördervorrichtung zum Befördern von Objekten und/oder Personen zur Verfügung zu stellen, bei dem eine präzisere Bestimmung der Pose des Objektes bzw. bei der eine präzisere Bestimmung der Pose der Transportplattform, insbesondere im zweidimensionalen Raum, der Fördervorrichtung erzielbar ist.

Die Aufgabe wird erfindungsgemäß durch ein Messsystem mit den Merkmalen des Anspruchs 1 gelöst.

Hieraus ergibt sich der Vorteil, dass durch eine einfache Bestimmung der Orientierung der Zugmittel die schnelle und genaue Positionierung des Objektes möglich ist. Ferner hat eine Änderung in den Längen der Zugmittel keinen Einfluss auf die Bestimmung der Pose durch das Messsystem.

Gemäß einem bevorzugten Ausführungsbeispiel umfasst das Objekt eine Kamera, einen Seilroboter, eine Simulationsplattform, eine Container-Krankatze oder dergleichen. Dies zeigt vorteilhafterweise die vielfältige Einsetzbarkeit des Messsystems.

Ferner umfasst gemäß einem weiteren bevorzugten Ausführungsbeispiel das Zugmittel Verbindungsseile, Riemen und Ketten. Vorteilhafterweise umfasst der Winkelsensor einen Drehgeber oder eine inertiale Messeinheit.

Gemäß einem weiteren bevorzugten Ausführungsbeispiel umfasst der Winkelsensor einen Drehgeber oder eine inertiale Messeinheit. Vorteilhafterweise umfasst der Drehgeber einen Single- oder Multiturn-Absolut-Drehgeber und die inertiale Messeinheit besteht aus einer Kombination aus einem dreiachsigen Beschleunigungssensor, insbesondere einem Neigungssensor und einem dreiachsigen Drehratensensor. Weiterhin umfasst die inertiale Messeinheit vorteilhafterweise einen neigungskompensierten Neigungssensor, der eine Querempfindlichkeit kompensiert.

Gemäß einem weiteren bevorzugten Ausführungsbeispiel umfasst der Aktuator einen Antriebsmotor mit einem Motorfeedbacksystem, das Daten zur Bestimmung einer bewegten Länge des Zugmittels liefert.

Gemäß einem weiteren bevorzugten Ausführungsbeispiel sind mindestens zwei Rollen vorgesehen, auf je eine Rolle ein Zugmittel auf- bzw. abgewickelt wird, und sind mindestens zwei Seilrollen vorgesehen, die das jeweilige Zugmittel umlenken. Vorteilhafterweise ist der Winkelsensor an einem Ende eines jeweiligen Zugmittels am Objekt oder an einem ersten Ende einer Halterung vorgesehen, wobei die Halterung mit dem ersten Ende das Zugmittel gleitend hält und mit einem zweiten Ende mit der Seilrolle verbunden ist.

Die Aufgabe wird weiterhin gelöst durch eine Fördervorrichtung zum Befördern von Objekten und/oder Personen, mit den Merkmalen des Anspruchs 9.

Hieraus ergibt sich der Vorteil, dass die Verbindungsseillängen keinen Einfluss auf die Bestimmung der Pose der Transportplattform der Fördervorrichtung haben. Ferner ergibt sich der Vorteil, dass die Fördervorrichtung ein hervorragendes Verhältnis Nutzlast zur bewegten Gesamtmasse aufweist und sehr schnell und präzise positionierbar ist.

Weiterhin ist gemäß einem weiteren bevorzugten Ausführungsbeispiel die Steuerung derart ausgelegt, dass die Daten der Winkelsensoren, des Motorfeedbacksystems und der in den Seilrollen vorgesehenen Multiturn-Drehgeber zur Bestimmung der Position der Transportplattform kombinierbar sind. Hierdurch ergibt sich der Vorteil, dass eine eventuelle Verkippung der Transportplattform mitberücksichtigt werden kann und damit eine noch genauere Bestimmung der Pose der Transportplattform möglich ist.

Die Steuerung ist ferner vorteilhafterweise derart ausgelegt, dass die Transportplattform in vorgegebenen Positionen bewegbar ist und die Winkelsensoren in den vorgegebenen Positionen kalibrierbar sind. Hierbei ist insbesondere ein externes Referenz-Erfassungssystem vorgesehen, das eine genaue Positionierung der Transportplattform in den vorgegebenen Positionen erfasst und gegenüber der Steuerung bestätigt. Dadurch ist die Fördervorrichtung exakt kalibriert und kann im Betrieb genau positioniert werden.

Gemäß einem weiteren bevorzugten Ausführungsbeispiel umfasst das Referenz-Erfassungssystem eine Kamera und Marker, wobei die Kamera beabstandet von der Transportplattform und die Marker an der Transportplattform angeordnet sind oder vice versa.

Insbesondere ist die Steuerung derart ausgelegt, dass Daten des Referenz-Erfassungssystems in einer Tabelle anlegbar sind, eine Nachkalibrierung der Winkelsensoren mittels eines Vergleichs mit aktuellen Daten durchführbar ist und die in der Tabelle angelegten Daten aktualisierbar sind. Hierdurch ist eine dauerhafte genaue Positionierung der Transportplattform gewährleistet.

Die erfindungsgemäße Fördervorrichtung kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1A eine schematische Darstellung einer ersten alternativen Ausführungsform eines erfindungsgemäßen Messsystems;

Fig. 1B eine schematische Darstellung eines weiteren bevorzugten Ausführungsbeispiels des erfindungsgemäßen Messsystems;

Fig. 2 eine schematische Darstellung einer zweiten alternativen Ausführungsform einer erfindungsgemäßen Fördervorrichtung;

Fig. 3 eine schematische Darstellung eines weiteren bevorzugten Ausführungsbeispiels der erfindungsgemäßen Fördervorrichtung;

Fig. 4 eine schematische Darstellung des erfindungsgemäßen Messsystems bzw. der erfindungsgemäßen Fördervorrichtung verkippungsfrei im zweidimensionalen Raum in Bezug auf ein Bezugskoordinatensystem; und

Fig. 5 eine schematische Darstellung des erfindungsgemäßen Messsystems bzw. der erfindungsgemäßen Fördervorrichtung mit einer Verkippung um einen Winkel $\gamma$ im zweidimensionalen Raum in Bezug auf ein Bezugskoordinatensystem.

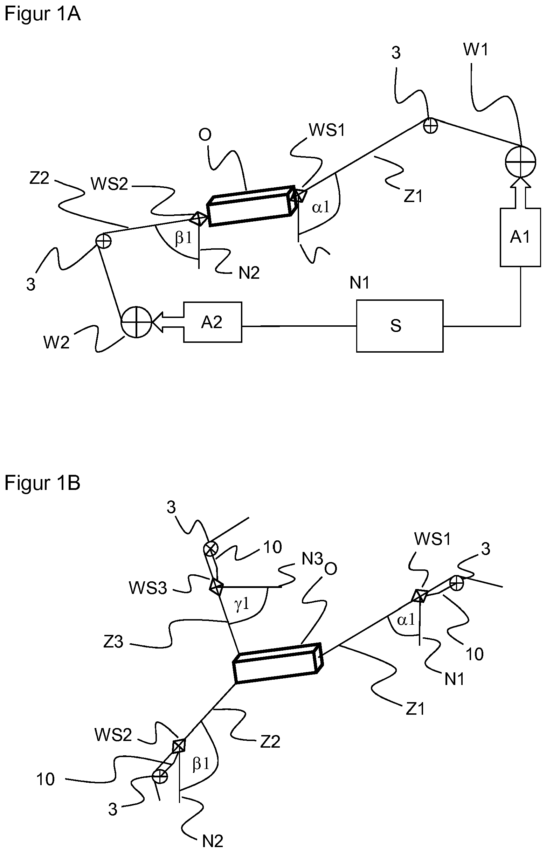

In der Figur 1 ist eine schematische Darstellung einer alternativen Ausführungsform der Erfindung dargestellt, in der ein im Raum zu positionierendes Objekt O abgebildet ist, wobei das Objekt O zu einem erfindungsgemäßen Messsystems gehört und beispielsweise eine Stadion-Kamera, einen Seilroboter oder dergleichen umfasst.

Das Objekt O ist mit mindestens zwei biegeschlaffe Zugmittel Z1, Z2 verbunden, die das Objekt (O) im Raum positionieren. Hierbei umfasst das Zugmittel Z1, Z2 beispielsweise ein Verbindungsseil, einen Riemen, eine Kette oder dergleichen, wobei das Zugmittel Z1, Z2 gespannt bzw. gegen ein Durchhängen geschützt ist und sich eine Länge des Zugmittels Z1, Z2 beim Positionieren des Objektes O verändern kann.

Jedes Zugmittel Z1, Z2 ist jeweils auf eine jeweilige Winde W1, W2 gewickelt, die von einem Aktuator A1, A2 angetrieben werden. Das heißt, der jeweilige Aktuator A1, A2 treibt die zugeordnete Winde W1, W2 an, um das jeweilige Zugmittel Z1, Z2 durch Auf- bzw. Abwickeln von der jeweiligen Winde W1, W2 zu bewegen. Die Aktuatoren A1, A2 werden von einer Steuerung S angesteuert. Hierdurch wird das Objekt O im Raum schnell und präzise positioniert. Zusätzlich ist jedes Zugmittel Z1, Z2 vorteilhafter durch jeweils eine Seilrolle 3 in Richtung des Objektes O umgelenkt, so dass die Zugmittel Z1, Z2 auf das Objekt O gerichtet sind.

Um die präzise Positionierung zu ermöglichen, sind erfindungsgemäß mindesten zwei Winkelsensoren WS1, WS2 vorgesehen, wobei je ein Winkelsensor WS1, WS2 an einem jeweiligen Zugmittel Z1, Z2 zugeordnet ist. In dem dargestellten Ausführungsbeispiel ist der Winkelsensor WS1, WS2 an einem Ende des Zugmittels Z1, Z2 angeordnet und stellt eine Verbindung zwischen dem Zugmittel Z1, Z2 und dem Objekt O dar. Jeder Winkelsensor WS1, WS2 bestimmt einen Winkel $\alpha 1$, $\beta 1$ zwischen dem jeweiligen Zugmittel Z1, Z2 und einer dem jeweiligen Zugmittel Z1, Z2 zugeordneten Bezugsachse N1, N2 als Winkelsignal und kommuniziert dieses an die Steuerung S. Anhand der bestimmten Winkelsignale kann die Steuerung S eine Orientierung der Zugmittel Z1, Z2 exakt ermitteln und hieraus die Position des Objektes O im Raum ohne eine negative Beeinflussung durch eine mögliche Längenänderung der Zugmittel Z1, Z2 errechnen.

Die Bezugsachse N1, N2 für den jeweiligen Winkelsensor WS1, WS2 ist in der Figur 1A als Gravitationsnormale definiert. Die Bezugsachse N1, N2 kann jedoch beliebig gewählt werden, um eine Nullpunkt-Achse für den zu bestimmenden Winkel $\alpha 1$, $\beta 1$ zu definieren, so dass die Bezugsachse N1, N2 beispielsweise auch eine waagerechte oder senkrechte Kante des Objektes O sein kann.

Vorteilhafterweise umfasst der Winkelsensor WS1, WS2 einen Drehgeber oder eine inertiale Messeinheit, wobei der Drehgeber vorzugsweise einen Single- oder Multiturn-Absolut-Drehgeber umfasst und die inertiale Messeinheit vorzugsweise aus einer Kombination aus einem dreiachsigen Beschleunigungssensor, insbesondere einem Neigungssensor und einem dreiachsigen Drehratensensor, besteht. Ferner kann die inertiale Messeinheit vorteilhafterweise einen beschleunigungskompensierten Neigungssensor umfassen, bei dem eine Querempfindlichkeit kompensiert ist. Hierdurch können kostengünstige Sensoren eingesetzt werden, um die Orientierung des Zugmittels Z1, Z2 und damit die Pose des Objektes O im Raum exakt zu detektieren.

Als bevorzugtes Ausführungsbeispiel, das in der Figur 1B dargestellt ist, umfasst das erfindungsgemäße Messsystem drei Zugmittel Z1 - Z3, die mit dem Objekt O verbunden sind und das Objekt O halten und positionieren. Drei Drehgeber WS1 - WS3 sind vorgesehen, wobei je ein Winkelsensor WS1 - WS3 an einem jeweiligen Zugmittel Z1 - Z3 angeordnet ist. Bei diesem Ausführungsbeispiel sind die Winkelsensoren WS1 - WS3 beabstandet vom Objekt O angeordnet. Hierbei weisen vorzugsweise die drei Seilrollen 3 jeweils eine Halterung 10 auf, die mit einem zweiten Ende mit der jeweiligen Seilrolle 3 verbunden ist und mit einem ersten Ende das jeweilige Zugmittel Z1 - Z3 gleitend hält. An dem ersten Ende der Halterung 10 ist insbesondere der Winkelsensor WS1 - WS3 angeordnet, so dass der Winkelsensor WS1 - WS3 präzise die Orientierung bzw. eine Änderung der Orientierung des Zugmittels Z1 - Z3 erfassen kann.

Die Positionierung des Objektes O im Raum mittels der drei Zugmittel Z1 - Z3 ist noch präziser als bei dem vorhergehenden Ausführungsbeispiel, da ein dritter Winkel $\gamma 1$ durch den dritten Winkelsensor WS3 bestimmt wird und ein drittes Winkelsignal beispielsweise eine Verkippung des Objektes O wiedergibt. Wie bei dem bevorzugten Ausführungsbeispiel dargestellt, werden die Winkel $\alpha 1$ und $\beta 1$ zwischen dem jeweiligen Zugmittel Z1 und Z2 und der zugehörigen Gravitationsnormale als Bezugsachsen N1 und N2 durch die Winkelsensoren WS1 und WS2 bestimmt. Der dritte Winkel $\gamma 1$ wird beispielsweise zwischen dem jeweiligen Zugmittel Z3 und einer Horizontale als Bezugsachse N3 bestimmt.

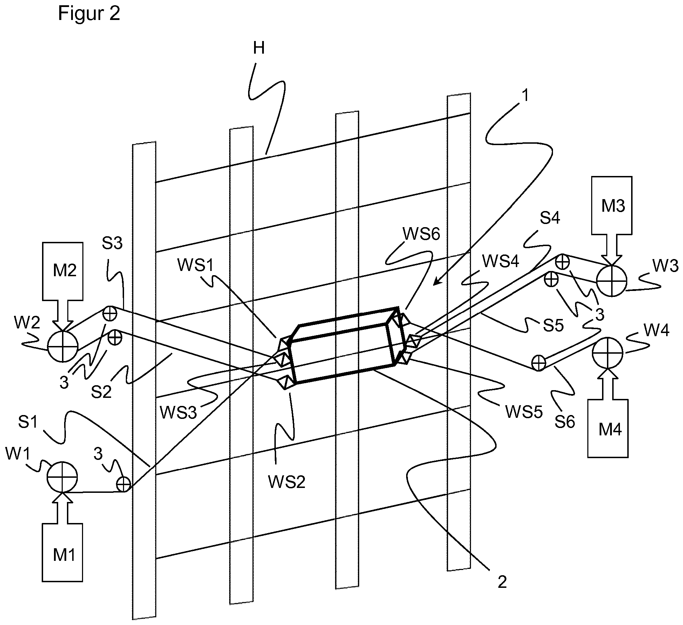

In der Figur 2 ist eine schematische Darstellung einer zweiten alternativen Ausführungsform einer erfindungsgemäßen Fördervorrichtung 1 zum Befördern von Objekten gezeigt, die aus einem sogenannten Seilroboter besteht.

Die erfindungsgemäße Fördervorrichtung 1 umfasst eine Transportplattform 2, auf der ein Objekt positionierbar ist. Die Fördervorrichtung 1 in dem gezeigten Ausführungsbeispiel ist als Endeffektor eines Hochregallagers H gezeigt, bei dem die Transportplattform 2 der Fördervorrichtung 1 vor Regalfächern des Hochregallagers H positionierbar ist, um Objekte aus der Transportplattform 2 zu entladen oder in die Transportplattform 2 zu beladen.

Die Transportplattform 2 ist mittels sechs Verbindungsseilen S1 bis S6 mit vier Antriebsmotoren M1 bis M4 verbunden, wobei die Verbindungsseile S1 bis S6 auf jeweilige Winden W1 bis W4 aufgewickelt sind. Die Antriebsmotoren M1 bis M4 treiben die jeweilige Winde W1 bis W4 derart an, dass die auf der jeweiligen Winde W1 bis W4 aufgewickelten Verbindungsseile S1 bis S6 ab- bzw. aufgewickelt werden, so dass die Transportplattform 2 in eine gewünschte Position gegenüber einem Regalfach des Hochregallagers H bewegt wird.

Hierbei sind die Verbindungsseile S2 und S3 auf die Winde W2 und die Verbindungsseile S4 und S5 auf die Winde W3 aufgewickelt. Die Winde W2 wird durch den Antriebsmotor M2 angetrieben und die Winde W3 wird durch den Antriebsmotor M3 angetrieben. Die vier genannten Verbindungsseile S2, S3, S4 und S5 sind an vier Ecken einer Bodenplatte der Transportplattform 2 angeordnet, so dass diese Verbindungsseile S2, S3, S4 und S5 im Wesentlichen die Bodenplatte der Transportplattform 2 bewegt.

Das Verbindungsseil S1 ist auf die Winde W1 aufgewickelt, die durch den Antriebsmotor M1 angetrieben wird. Das Verbindungsseil S6 ist auf die Winde W4 aufgewickelt, die ebenfalls durch den eigenen Antriebsmotor M4 angetrieben wird. Diese beiden Verbindungsseile S1 und S6 sind an zwei gegenüberliegenden Kanten einer Kopfplatte der Transportplattform 2 angeordnet, so dass die Verbindungsseile S1 und S6 die Kopfplatte der Transportplattform 2 synchron zu der Bodenplatte der Transportplattform 2 bewegen.

Gemäß dem Ausführungsbeispiel sind die sechs Verbindungsseile S1 bis S6 jeweils an einem Verbindungsseilende mit einem Winkelsensor WS1 bis WS6 versehen, so dass jedes Verbindungsseilende jeweils ein Winkelsensor WS1 bis WS6 an der Transportplattform 2 aufweist. Mit anderen Worten, je ein Winkelsensor WS1 bis WS6 ist an je einem Verbindungsseilende an der Transportplattform 2 angeordnet. Hierbei kann der Winkelsensor WS1 bis WS6 als direkte Verbindung zwischen dem jeweiligen Verbindungsseilende und der Transportplattform 2 dienen oder in eine Verbindungseinheit zwischen dem jeweiligen Verbindungsseilende und der Transportplattform 2 integriert sein.

Jeder Winkelsensor WS1 bis WS6 bestimmt und kommuniziert einen Winkel zwischen dem jeweiligen Verbindungsseil S1 bis S6 und einer jeweiligen senkrechten Kante der Transportplattform 2 als Winkelsignal an eine nicht gezeigte Steuerung, die eine absolute Pose und eine Orientierung der Transportplattform 2 im dreidimensionalen Raum errechnet und die Antriebsmotoren M1 bis M4 entsprechend ansteuert, so dass die Transportplattform 2 präzise vor einem gewünschten Regalfach des Hochregallagers H positionierbar ist.

Durch die direkte Anordnung der Winkelsensoren WS1 bis WS6 an der Transportplattform 2 und den Enden der jeweiligen Verbindungsseilen S1 bis S6 kann ein Einfluss der Verbindungsseillängen, die Elastizität der Verbindungsseile S1 bis S6 und die Bewegung der Verbindungsseile S1 bis S6 im Allgemeinen auf die Berechnung der Pose der Transportplattform 2 vermieden werden. Insbesondere sind die Verbindungsseile S1 bis S6 durch Seilrollen 3a bis 3f umgelenkt, so dass eine durch die Umlenkung mögliche Ungenauigkeit bei der Bestimmung der Pose und Orientierung der Transportplattform 2 vernachlässigt werden kann.

Vorzugsweise ist der Winkelsensor WS1 bis WS6 ein Drehgeber oder eine inertiale Messeinheit, wobei der Drehgeber, insbesondere einen Single- oder Multiturn-Absolut-Drehgeber umfasst und die inertiale Messeinheit, insbesondere aus einer Kombination aus einem dreiachsigen Beschleunigungssensor, insbesondere einem Neigungssensor und einem dreiachsigen Drehratensensor besteht.

Die Transportplattform 2 des gezeigten Ausführungsbeispiels umfasst einen Käfig, in dem das Objekt mittels Aktoren be- und entladbar ist. Die Transportplattform 2 kann gemäß einem nicht gezeigten Ausführungsbeispiel auch aus einem derart gestalteten Käfig bestehen, in dem eine Person Platz nehmen kann. Das heißt, die Transportplattform 2 dient als sogenannter Endeffektor der Fördervorrichtung 1 bzw. als Plattform für einen Simulator.

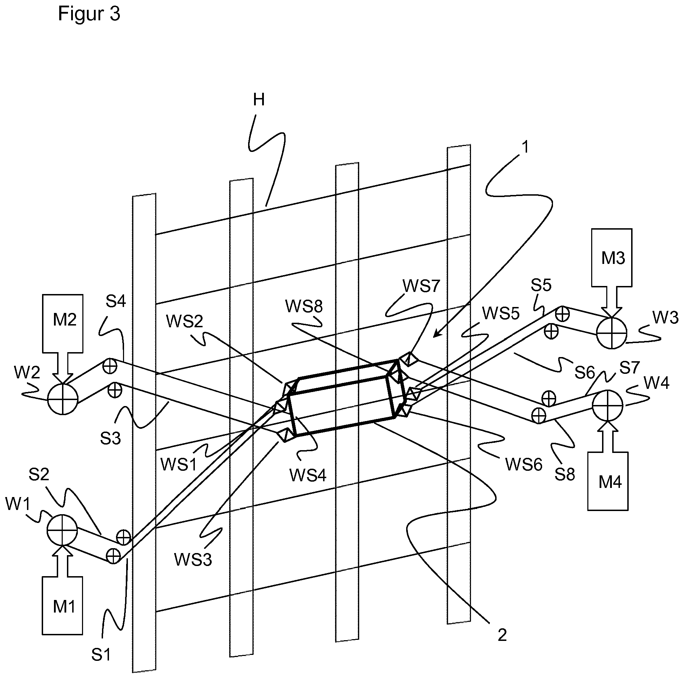

Bei der schematischen Darstellung eines weiteren bevorzugten Ausführungsbeispiels einer erfindungsgemäßen Fördervorrichtung 1, insbesondere in Form eines Seilroboters in der Figur 3, ist die Transportplattform 2 mittels acht Verbindungsseilen S1 bis S8 mit vier Antriebsmotoren M1 bis M4 verbunden.

Hierbei sind jeweils zwei Verbindungsseile S1 und S2, S3 und S4, S5 und S6 sowie S7 und S8 als Paar auf eine jeweilige Winde W1 bis W4 aufgewickelt, die von den jeweiligen Antriebsmotoren M1 bis M4 angetrieben werden. Die Paare von Verbindungsseilen S1 und S2, S3 und S4, S5 und S6 sowie S7 und S8 sind an Ecken einer gemeinsamen waagerechten Kante der Transportplattform 2 verbunden.

Gemäß dem Ausführungsbeispiel ist je ein Winkelsensor WS1 bis WS8 an je einem Verbindungsseilende eines Verbindungsseils S1 bis S8 an der Transportplattform 2 angeordnet. Das heißt, in diesem Ausführungsbeispiel sind acht Winkelsensoren WS1 bis WS8 vorgesehen. Die acht Winkelsensoren WS1 bis WS8 liefern jeweils ein Winkelsignal an die nicht dargestellte Steuerung, so dass die Steuerung die Pose der Transportplattform 2 noch präziser ermitteln kann.

Um eine noch genauere und stabilere Fördervorrichtung 1 zu erhalten, kann vorteilhafterweise für jedes Verbindungsseil S1 bis S8 eine separate Winde mit eigenem Antriebsmotor vorgesehen sein, so dass bei dem Ausführungsbeispiel der Figur 3 beispielsweise acht Winden und acht Antriebsmotoren anstatt die dargestellten vier Winden W1 bis W4 und vier Antriebsmotoren M1 bis M4 angeordnet sein können. Zusätzlich ermöglicht die voneinander völlig unabhängige Ansteuerung der Verbindungsseile S1 bis S8 eine erhöhte Flexibilität der Fördervorrichtung 1 im Raum.

Für die Bestimmung der Pose der Transportplattform 2 im zweidimensionalen Raum sind erfindungsgemäß lediglich zwei Winkelsignale, das heißt zwei Winkelsensoren, notwendig. Um eine Verkippung, das heißt ein Winkel zwischen einer Horizontalen und der Orientierung der Transportplattform 2 zu bestimmen, wird gemäß einem Ausführungsbeispiel ein weiteres Winkelsignal benötigt.

Im dreidimensionalen Raum werden sechs Winkelsignale, das heißt sechs Winkelsensoren, benötigt. In Figur 2 sind sechs Winkelsensoren WS1 bis WS6 vorgesehen, so dass eine präzise Bestimmung der Pose und Orientierung der Transportplattform 2 im dreidimensionalen Raum möglich ist. In Figur 3 sind acht Winkelsensoren WS1 bis WS8 vorgesehen, so dass das überbestimmte System eine Kombination der Winkelsignale mittels geeigneten Sensordatenfusionsalgorithmen eine Erhöhung der Genauigkeit der Bestimmung der Pose und Orientierung der Transportplattform 2 ermöglicht.

Vorteilhafterweise ist es auch möglich, je nach Position der Transportplattform 2 in Bezug auf das Hochregallager H die Winkelsignale bestimmter Winkelsensoren WS1 - WS3 oder WS4 - WS6 in Figur 2 bzw. WS1 - WS4 oder WS5 - WS8 in Figur 3 zur Bestimmung der Absolutposition und Orientierung der Transportplattform 2 im Raum zu nutzen. Das heißt, beispielsweise befindet sich die Transportplattform 2 näher zu einer linken Seite des Hochregallagers H und somit weiter weg von einer rechten Seite des Hochregallagers H, so eignen sich die Winkelsignale der auf der linken Seite der Transportplattform 2 angeordneten Winkelsensoren, WS1 bis WS3 in Figur 2 bzw. WS1 - WS 4 in Figur 3, besser zur Bestimmung der Absolutposition und Orientierung der Transportplattform 2, da die Winkelsignale der auf der rechten Seite der Transportplattform 2 angeordneten Winkelsensoren, WS4 - WS6 in Figur 2 bzw. WS5 - WS8 in Figur 3, aufgrund der größeren Verbindungsseillängen ungenauer sind. Durch eine Kombination aller Winkelsignale lässt sich im Ganzen die Genauigkeit verbessern.

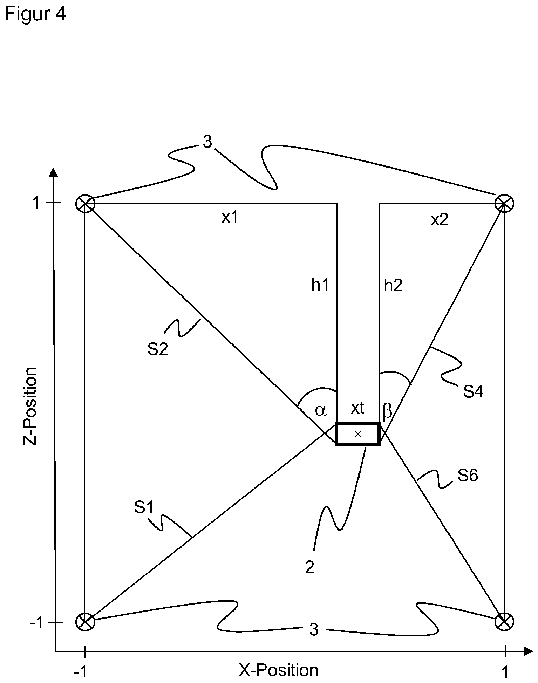

Eine erfindungsgemäße Bestimmung der Pose des Objektes, das beispielhaft in Form der Transportplattform 2 dargestellt ist, im zweidimensionalen Raum soll folgend anhand der Figur 4 erläutert werden, in der die Transportplattform 2 schematisch im zweidimensionalen Raum in Bezug auf ein Bezugskoordinatensystem abgebildet ist. Hierbei wird eine verkippungsfreie Pose der Transportplattform 2 vorausgesetzt.

Die Transportplattform 2 ist an den biegeschlaffen Zugmitteln, die in Form der Verbindungsseilen S1 bis S4 dargestellt sind, aufgehängt, wobei die Verbindungsseillängen der Verbindungsseile S1 bis S4 zwischen der Transportplattform 2 und den Seilrollen 3 abgebildet sind.

Ferner werden die Winkel $\alpha$, zwischen dem Verbindungsseil S2 und der linken senkrechten Kante der Transportplattform 2 bzw. einer Normalen zur Erdoberfläche, und $\beta$, zwischen dem Verbindungsseil S4 und der rechten senkrechten Kante der Transportplattform 2 bzw. der Normalen zur Erdoberfläche, zur Bestimmung der Absolutposition der Transportplattform 2 verwendet, so dass sich die Position der Transportplattform 2 aus folgenden drei Gleichungen ergibt:

$$\tan \alpha = x1 \ / \ h1 \qquad (1)$$

$$\tan \beta = x2 \ / \ h2 \qquad (2)$$

$$x \ (gesamt) = x1 + x2 + xt \qquad (3),$$

wobei x1 bzw. x2 einen horizontalen Abstand von der linken bzw. rechten oberen Seilrolle 3 zu der linken bzw.

rechten senkrechten Kante der Transportplattform 2 bzw. der Normalen zur Erdoberfläche und xt eine Breite der Transportplattform 2 darstellen. h1 und h2 stellen jeweils den vertikalen Abstand der Transportplattform 2 zu den oberen Seilrollen 3 dar.

Hieraus folgt:

$$h1 = x \ (gesamt) \ / \ (\tan \alpha + \tan \beta) \qquad (4)$$

$$x1 = h1 * \tan \alpha \qquad (5)$$

$$x2 = h1 * \tan \beta \qquad (6).$$

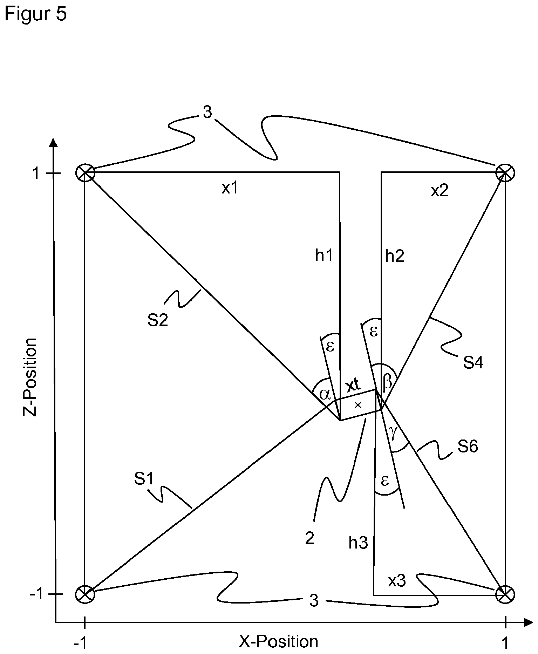

Bei einer Verkippung der Transportplattform 2 um einen Winkel $\varepsilon$ im zweidimensionalen Raum, wie in der Figur 5 dargestellt, wird vorteilhafterweise ein drittes Winkelsignal zur exakten Bestimmung der Absolutposition und Orientierung der Transportplattform 2 benötigt. Hierzu müssen die folgenden Gleichungen gelöst werden:

$$\tan \alpha + \varepsilon = x1 \ / \ h1 \qquad (7)$$

$$\tan \beta - \varepsilon = x2 \ / \ h2 \qquad (8)$$

$$\tan \gamma + \varepsilon = x3 \ / \ h3 \qquad (9).$$

Dieses Gleichungssystem kann bei Berücksichtigung der Position der Seilrollen 3 numerisch gelöst werden und liefert entsprechend die Absolutposition und den Verkippungswinkel $\varepsilon$ der Transportplattform 2.

Wie bereits erwähnt, ist die Bestimmung der Pose und Orientierung der Transportplattform 2 im dreidimensionalen Raum durch das Vorsehen von mindestens sechs Winkelsensoren WS1 bis WS6 genau bestimmbar.

Vorteilhafterweise umfassen die Antriebsmotoren M1 bis M4 jeweils ein Motorfeedbacksystem, das Daten zur Bestimmung der bewegten Verbindungsseillänge liefert. Ferner kann in jeder Seilrolle 3 ein Multiturn-Drehgeber vorgesehen sein, der ebenfalls Daten zur Bestimmung der bewegten Verbindungsseillänge zwischen der Transportplattform 2 und den Seilrollen 3 liefert. Diese Daten können bei der Bestimmung der Pose und Orientierung der Transportplattform 2 mitberücksichtigt werden, so dass die Bestimmung noch genauer sein kann.

Um weitere Genauigkeit bei der Bestimmung der Pose und Orientierung der Transportplattform 2 zu erreichen, ist die Steuerung derart ausgelegt, dass die Transportplattform 2 in vorgegebenen Positionen bewegt wird und die Winkelsensoren WS1 bis WS8 in den vorgegebenen Positionen kalibriert werden. Hierbei wird die Transportplattform 2 in einzelne Positionen in Bezug zu dem Hochregallager H bewegt, wo die Winkelsensoren WS1 bis WS8 kalibriert werden. Vorteilhafterweise ist ein externes Referenz-Erfassungssystem vorgesehen, das eine genaue Positionierung der Transportplattform 2 in den vorgegebenen einzelnen Positionen erfasst und gegenüber der Steuerung bestätigt.

Das Referenz-Erfassungssystem umfasst vorzugsweise eine Kamera und Marker. Die Kamera kann beabstandet von der Transportplattform 2 und die Marker können an der Transportplattform 2 angeordnet sein. Anwendungs- oder aufbauspezifisch kann die Kamera auch an der Transportplattform 2 und die Marker können beabstandet von der Transportplattform 2 angeordnet sein. Die Daten des Referenz-Erfassungssystems können in einer Tabelle angelegt werden, so dass eine einmalige Kalibrierung durchführbar ist.

Andererseits können die Daten des Referenz-Erfassungssystems im laufenden Betrieb zur Nachkalibrierung der Winkelsensoren WS1 bis WS8 genutzt werden. Hierbei können die aktuellen Daten mit den abgelegten Daten verglichen werden. Dabei können die angelegten Daten in der Tabelle aktualisiert werden.

Als alternative Ausführung können anstatt der dargestellten Winkelsensoren WS 1 bis WS8 inertiale Messeinheiten, in Form von dreiachsigen Beschleunigungssensoren an den Verbindungsseilenden an der Transportplattform 2 verwendet werden, wobei die dreiachsigen Beschleunigungssensoren jeweils einen Winkel relativ zur Normalkraft bzw. Erdbeschleunigung ermitteln. Unterstützend können hier, insbesondere bei dynamischen Anwendungen, Drehratensensoren verwendet werden, um durch Integration aus den Winkeländerungen Winkelpositionen zu berechnen.

Diese Daten können durch Sensordatenfusion für höhere Genauigkeitsanforderungen je Verbindungsseil S1 bis S8 kombiniert werden.

Alternativ kann auch aus den Daten des dreiachsigen Beschleunigungssensors und dreiachsigen Drehratensensors eine Beschleunigung der Transportplattform 2 in der x-y-Ebene berechnet werden, so dass diese Information für die Lage der anderen Verbindungsseilenden berücksichtigt werden kann. Das heißt, insbesondere in diesem Fall wird nur ein zusätzlicher Drehratensensor für alle sechs bis acht Verbindungsseile S1 bis S8 und sechs bis acht Beschleunigungssensoren an den Verbindungsseilen S1 bis S8 benötigt.

**Bezugszeichenliste**

| | |
|---|---|
| 1 | Fördervorrichtung |
| 2 | Transportplattform |
| 3 | Seilrolle |
| A1, A2 | Aktuator |
| H | Hochregallager |

| | |
|---|---|
| h1 - h3 | Vertikaler Abstand der Transportplattform |
| M1 - M4 | Antriebsmotor |
| N1 - N3 | Bezugsachse |
| O | Objekt |
| S1 - S8 | Verbindungsseil |
| W1 - W4 | Winde |
| WS1 - WS8 | Winkelsensor |
| x1 - x3 | Horizontaler Abstand der Transportplattform |
| xt | Breite der Transportplattform |
| Z1 - Z3 | Biegeschlaffes Zugmittel |
| $\alpha, \beta, \gamma$ | Winkel zwischen einem Verbindungsseil und einer senkrechten Kante der Transportplattform |
| $\alpha 1, \beta 1, \gamma 1$ | Winkel zwischen einem Zugmittel und einer Bezugsachse |
| $\varepsilon$ | Kippwinkel der Transportplattform |

**Patentansprüche**

1. Messsystem zum Bestimmen einer Pose, insbesondere einer Position und einer Orientierung, eines an biegeschlaffen Zugmitteln (Z1 - Z3) aufgehängten Objektes (O), umfassend
das Objekt (O), das im Raum positionierbar ist,
mindestens zwei Zugmittel (Z1 - Z3), die mit dem Objekt (O) verbunden sind und das Objekt (O) positionieren,
mindestens zwei Aktuatoren (A1, A2), die die Zugmittel (Z1 - Z3) bewegen, eine Steuerung, die die Aktuatoren (A1, A2) ansteuert,
**gekennzeichnet durch**
mindestens zwei Winkelsensoren (WS1 - WS8), wobei je ein Winkelsensor (WS1 - WS8) an einem jeweiligen Zugmittel (Z1 - Z3) angeordnet ist und jeder Winkelsensor (WS1 - WS8) einen Winkel ($\alpha 1$, $\beta 1$, $\gamma 1$) zwischen dem jeweiligen Zugmittel (Z1 - Z3) und einer dem jeweiligen Zugmittel (Z1 - Z3) zugeordneten Bezugsachse (N1, N2, N3) als Winkelsignal bestimmt und an die Steuerung kommuniziert, und
wobei die Bezugsachse (N1, N2, N3) eine Gravitationsnormale oder eine Horizontale oder eine senkrechte oder waagerechte Kante des Objektes (O) umfasst.

2. Messsystem nach Anspruch 1, **dadurch gekennzeichnet, dass** das Objekt (O) eine Kamera, einen Seilroboter, eine Simulationsplattform, eine Container-Krankatze oder dergleichen umfasst.

3. Messsystem nach Anspruch 1 oder 2, **dadurch gekennzeichnet, dass** der Winkelsensor (WS1 - WS8) einen Drehgeber oder eine inertiale Messeinheit umfasst.

**4.** Messsystem nach Anspruch 3, **dadurch gekennzeichnet, dass** der Drehgeber einen Single- oder Multiturn-Absolut-Drehgeber umfasst und die inertiale Messeinheit aus einer Kombination aus einem mindestens einachsigen Beschleunigungssensor, insbesondere einem Neigungssensor und einem mindestens einachsigen Drehratensensor, besteht.

**5.** Messsystem nach Anspruch 3 oder 4, **dadurch gekennzeichnet, dass** die inertiale Messeinheit einen beschleunigungskompensierten Neigungssensor umfasst, bei dem eine Querempfindlichkeit kompensiert ist.

**6.** Messsystem nach einem der vorhergehenden Ansprüche 1 bis 5, **dadurch gekennzeichnet, dass** der Aktuator (A1, A2) einen Antriebsmotor (M1 - M4) mit einem Motorfeedbacksystem umfasst, das Daten zur Bestimmung einer bewegten Länge des Zugmittels (S1 - S8) liefert.

**7.** Messsystem nach einem der vorhergehenden Ansprüche 1 bis 6, **dadurch gekennzeichnet, dass** mindestens zwei Winden (W1, W2) vorgesehen sind, auf je eine Winde (W1, W2) ein Zugmittel (S1 - S8) auf- bzw. abgewickelt wird, und mindestens zwei Seilrollen (3) vorgesehen sind, die das jeweilige Zugmittel (Z1 - Z3) umlenken.

**8.** Messsystem nach Anspruch 7, **dadurch gekennzeichnet, dass** der Winkelsensor (WS1 - WS8) an einem Ende eines jeweiligen Zugmittels (Z1 - Z3) am Objekt (O) oder an einem ersten Ende einer Halterung (10) vorgesehen ist, wobei die Halterung (10) mit dem ersten Ende das Zugmittel (Z1 - Z3) gleitend hält und mit einem zweiten Ende mit der Seilrolle (3) verbunden ist.

**9.** Fördervorrichtung (1) zum Befördern von Objekten und/oder Personen, mit einer Transportplattform (2), auf der das Objekt und/oder die Person positionierbar sind, mit mindestens vier Antriebsmotoren (M1 - M4), die die Transportplattform (2) bewegen, mit mindestens sechs Verbindungsseilen (S1 - S8), die die Transportplattform (2) mit den Antriebsmotoren (M1 - M4) verbindet, wobei die Transportplattform (2) durch Auf- bzw. Abwickeln der jeweiligen Verbindungsseile (S1 - S8) mittels der Antriebsmotoren (M1 - M4) in eine gewünschte Position bewegbar ist, mit einer Steuerung, die die Antriebsmotoren (M1 - M4) ansteuert, **gekennzeichnet durch** mindestens zwei Winkelsensoren (WS2, WS4), wobei je ein Winkelsensor (WS2, WS4) an einem jeweiligen Verbindungsseilende (S2, S4) an der Transportplattform (2) angeordnet ist und jeder Winkelsensor (WS2, WS4) einen Winkel ($\alpha$, $\beta$) zwischen dem jeweiligen Verbindungsseil (S2, S4) und einer jeweiligen senkrechten Kante der Transportplattform (2) als Winkelsignal an die Steuerung kommuniziert, wobei die Fördervorrichtung (1) eine Simulationsplattform, ein Kameragestell oder eine Container-Krankatze umfasst.

**10.** Fördervorrichtung (1) nach Anspruch 9, **dadurch gekennzeichnet, dass** die Steuerung derart ausgelegt ist, dass die Transportplattform (2) in vorgegebenen Positionen bewegbar ist und die Winkelsensoren (WS1 - WS8) in den vorgegebenen Positionen kalibrierbar sind.

**11.** Fördervorrichtung (1) nach Anspruch 9 oder 10, **dadurch gekennzeichnet, dass** der Winkelsensor (WS1 - WS8) einen Drehgeber oder eine inertiale Messeinheit umfasst.

**12.** Fördervorrichtung (1) nach Anspruch 11, **dadurch gekennzeichnet, dass** der Drehgeber einen Single- oder Multiturn-Absolut-Drehgeber umfasst und die inertiale Messeinheit aus einer Kombination aus einem dreiachsigen Beschleunigungssensor, insbesondere einem Neigungssensor und einem dreiachsigen Drehratensensor, besteht.

**Claims**

**1.** Measuring system for determining a pose, in particular a position and an orientation, of an object (O) suspended from flexible tensile means (Z1 - Z3), comprising
the object (O) which can be positioned in the room,
at least two pulling means (Z1 - Z3) connected to the object (O) and positioning the object (O),
at least two actuators (A1, A2) which move the pulling means (Z1 - Z3),
a controller which controls the actuators (A1, A2),
**characterized by**
at least two angle sensors (WS1 - WS8),
wherein one angle sensor (WS1 - WS8) each is arranged on a respective pulling means (Z1 - Z3), and each angle sensor (WS1 - WS8) determines an angle ($\alpha1$, $\beta1$, $\gamma1$) between the respective pulling means (Z1 - Z3) and a reference axis (N1, N2, N3) assigned to the respective pulling means (Z1 - Z3) as an angle signal and communicates it to the controller, and wherein the reference axis (N1, N2, N3) comprises a gravitational normal or a horizontal or a vertical or horizontal edge of the object (O).

**2.** Measuring system according to claim 1, **characterized in that** the object (O) comprises a camera, a cable robot, a simulation platform, a container crane trolley or the like.

**3.** Measuring system according to claim 1 or 2, **characterized in that** the angle sensor (WS1 - WS8) comprises a rotary encoder or an inertial measuring unit.

**4.** Measuring system according to Claim 3, **characterized in that** the rotary encoder comprises a single-axis or multiturn absolute rotary encoder and the inertial measuring unit consists of a combination of an acceleration sensor with at least one axis, in particular an inclination sensor, and an angular rate sensor with at least one axis.

**5.** Measuring system according to claim 3 or 4, **characterized in that** the inertial measuring unit comprises an acceleration-compensated inclination sensor in which a transverse sensitivity is compensated.

**6.** A measuring system according to any of the preceding claims 1 to 5, **characterized in that** the actuator (A1, A2) comprises a drive motor (M1 - M4) having a motor feedback system which provides data for determining a moving length of the pulling means (S1 - S8).

**7.** Measuring system according to one of the preceding claims 1 to 6, **characterized in that** at least two winches (W1, W2) are provided, a pulling means (S1 - S8) is wound or unwound onto one winch (W1, W2) each, and at least two pulleys (3) are provided which deflect the respective pulling means (Z1 - Z3).

**8.** Measuring system according to claim 7, **characterized in that** the angle sensor (WS1 - WS8) is provided at one end of a respective pulling means (Z1 - Z3) on the object (O) or at a first end of a holder (10), the holder (10) holds slidably the pulling means (Z1 - Z3) at the first end and is connected to the rope pulley (3) at a second end.

**9.** Conveying device (1) for conveying objects and/or persons, having a transport platform (2) on which the object and/or the person can be positioned, with at least four drive motors (M1 - M4) which move the transport platform (2), having at least six connecting cables (S1 - S8) which connect the transport platform (2) to the drive motors (M1 - M4), the transport platform (2) being movable into a desired position by winding up or unwinding the respective connecting cables (S1 - S8) by means of the drive motors (M1 - M4), with a controller which controls the drive motors (M1 - M4), **characterized by** at least two angle sensors (WS2, WS4), wherein one angle sensor (WS2, WS4) each is arranged at a respective connecting cable end (S2, S4) on the transport platform (2) and each angle sensor (WS2, WS4) communicates an angle ($\alpha$, $\beta$) between the respective connecting cable (S2, S4) and a respective vertical edge of the transport platform (2) as an angle signal to the controller, wherein the conveyor (1) comprises a simulation platform, a camera stand or a container trolley.

**10.** Conveying device (1) according to claim 9, **characterized in that** the controller is configured such that the conveying platform (2) can be moved in predetermined positions and the angle sensors (WS1 - WS8) can be calibrated in the predetermined positions.

**11.** Conveying device (1) according to claim 9 or 10, **characterized in that** the angle sensor (WS1 - WS8) comprises a rotary encoder or an inertial measuring unit.

**12.** Conveying device (1) according to claim 11, **characterised in that** the rotary encoder comprises a single-turn or multiturn absolute rotary encoder and the inertial measuring unit consists of a combination of a triaxial acceleration sensor, in particular a tilt sensor and a triaxial rotation rate sensor.

**Revendications**

**1.** Système de mesure pour déterminer une pose, en particulier une position et une orientation, d'un objet (O) suspendu à des moyens de traction flexibles (Z1 - Z3), comprenant

l'objet (O) qui peut être placé dans l'espace, au moins deux moyens de traction (Z1 - Z3) reliés à l'objet (O) et positionnant l'objet (O), au moins deux actionneurs (A1, A2) qui meuvent les moyens de traction (Z1 - Z3), une commande qui commande les actionneurs (A1, A2), **caractérisé par** au moins deux capteurs d'angle (WS1 - WS8), dans lequel un capteur d'angle (WS1 - WS8) est disposé respectivement sur un moyen de traction respectif (Z1 - Z3), et chaque capteur d'angle (WS1 - WS8) détermine un angle ($\alpha$1, $\beta$1, $\gamma$1) entre le moyen de traction respectif (Z1 - Z3) et un axe de référence (N1, N2, N3) affecté au moyen de traction respectif (Z1 - Z3) comme signal angulaire et communique celui-ci à la commande , et dans lequel l'axe de référence (N1, N2, N3) comprend une normale gravitationnelle ou un bord horizontal ou vertical de l'objet (O).

**2.** Système de mesure selon la revendication 1, **caractérisé en ce que** l'objet (O) comprend une caméra, un robot câble, une plate-forme de simulation, un chariot de grue pour conteneurs ou similaire.

3. Système de mesure selon la revendication 1 ou 2, **caractérisé en ce que** le capteur d'angle (WS1 - WS8) comprend un transmetteur de vitesse ou une unité de mesure inertielle.

4. Système de mesure selon la revendication 3, **caractérisé en ce que** le transmetteur de vitesse comprend un capteur rotatif absolu à un ou plusieurs rotation et l'unité de mesure inertielle consiste en une combinaison d'un capteur d'accélération avec au moins un axe, en particulier un capteur d'inclinaison, et un capteur de vitesse angulaire avec au moins un axe.

5. Système de mesure selon la revendication 3 ou 4, **caractérisé en ce que** l'unité de mesure inertielle comprend un capteur d'inclinaison compensé en accélération dans lequel une sensibilité transversale est compensée.

6. Système de mesure selon l'une des revendications précédentes 1 à 5, **caractérisé en ce que** l'actionneur (A1, A2) comprend un moteur d'entraînement (M1 - M4) ayant un système de rétroaction du moteur qui fournit des données pour déterminer une longueur mobile des moyens de traction (S1 - S8).

7. Système de mesure selon l'une des revendications précédentes 1 à 6, **caractérisé en ce qu'**au moins deux treuils (W1, W2) sont prévus, un moyen de traction (S1 - S8) est enroulé ou déroulé sur un treuil (W1, W2) respectif, et au moins deux poulies (3) sont prévues qui dévient le moyen de traction respectif (Z1 - Z3).

8. Système de mesure selon la revendication 7, **caractérisé en ce que** le capteur d'angle (WS1 - WS8) est prévu à une extrémité d'un moyen de traction respectif (Z1 - Z3) sur l'objet (O) ou à une première extrémité d'un support (10), le support (10) tient le moyen de traction (Z1 - Z3) par glissement à la première extrémité et est relié au tambour (3) par une deuxième extrémité.

9. Dispositif de transport (1) pour le transport d'objets et/ou de personnes, comprenant une plate-forme de transport (2) sur laquelle l'objet et/ou la personne peut être positionné, avec au moins quatre moteurs d'entraînement (M1 - M4) qui déplacent la plate-forme de transport (2), avec au moins six câbles de raccordement (S1 - S8) qui relient la plate-forme de transport (2) aux moteurs d'entraînement (M1 - M4), la plate-forme de transport (2) étant mobile dans une position souhaitée par enroulement ou déroulement des câbles de raccordement respectifs (S1 - S8) au moyen des moteurs d'entraînement (M1 - M4), avec une commande qui commande les moteurs d'entraînement (M1 - M4), **caractérisé par** au moins deux capteurs d'angle (WS2, WS4), dans lequel un capteur d'angle (WS2, WS4) est disposé respectivement à une extrémité de câble de connexion respective (S2, S4) sur la plate-forme de transport (2) et chaque capteur d'angle (WS2, WS4) communique un angle ($\alpha$, $\beta$) entre le câble de connexion respectif (S2, S4) et une bord verticale respective de la plate-forme de transport (2) comme signal angulaire à la commande, dans laquelle le convoyeur (1) comprend une plate-forme de simulation, un support de caméra ou un chariot à conteneurs.

10. Dispositif de transport (1) selon la revendication 9, **caractérisé en ce que** le dispositif de commande est configuré de telle sorte que la plate-forme de transport (2) peut être déplacée dans des positions prédéterminées et les capteurs angulaires (WS1 - WS8) peuvent être calibrés dans les positions prédéterminées.

11. Dispositif de transport (1) selon la revendication 9 ou 10, **caractérisé en ce que** le capteur d'angle (WS1 - WS8) comprend un transmetteur de vitesse ou une unité de mesure inertielle.

12. Dispositif de transport (1) selon la revendication 11, **caractérisé en ce que** le transmetteur de vitesse comprend un capteur rotatif absolu monotour ou multi-tours et l'unité de mesure inertielle consiste en une combinaison d'un capteur d'accélération triaxiale, en particulier un capteur d'inclinaison et un capteur de vitesse de rotation triaxiale.

Figur 1A

Figur 1B

Figur 2

Figur 3

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010015530 A1